(19) Europäisches Patentamt
European Patent Office
Office européen des brevets

(11) **EP 2 720 403 A1**

(12) **EUROPEAN PATENT APPLICATION**

(43) Date of publication:
**16.04.2014 Bulletin 2014/16**

(51) Int Cl.:
*H04L 9/00* *(2006.01)*      *H04L 9/30* *(2006.01)*

(21) Application number: **12306250.7**

(22) Date of filing: **12.10.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Thomson Licensing**
**92130 Issy-les-Moulineaux (FR)**

(72) Inventors:
• **Joye, Marc**
**92443 Issy-les-Moulineaux (FR)**
• **Libert, Benoît**
**92443 Issy-les-Moulineaux (FR)**

(74) Representative: **Ståhl, Björn Niclas et al**
**Thomson**
**1, rue Jeanne d'Arc**
**92443 Issy-les-Moulineaux, Cedex (FR)**

(54) **Aggregator-oblivious encryption of time-series data**

(57)     A processor (111) of a device (110) of user $i$ in an aggregator-oblivious encryption system with $n$ users encrypts a message $\overrightarrow{x_{i,t}} = (x_{i,t,1}, \dots, x_{i,t,r})$ where $t$ denotes a time period by generating an encrypted value $c_{i,t}$ for the time period $t$, by calculating $c_{i,t} = g_1^{x_{i,t,1}} \cdots g_r^{x_{i,t,r}} \cdot H(t)^{S_i}$, wherein $H(t)$ is a hash function that hashes the time $t$ on to an element of a first group $G_1$ with order $q_1$ in which discrete logarithms are are calculable only non-polynomial time for a security parameter $\kappa$, wherein $g_1, \cdots, g_r$ is the base of a second group $G_2 = \langle g_1, \cdots, g_r \rangle$ with order $q_2$ in which discrete logarithms are calculable in polynomial time, the first group $G_1$ and the second group $G_2$ both being different subgroups of a third group G, and wherein $S_i$ is a key for user $i$ provided by a dealer so that an aggregator key $s_0 = -\sum_{i=1}^{n} s_i$ and outputs the encrypted value $c_{i,t}$ to an aggregator (120). The aggregator obtains the sum $X_t$ for time period $t$ by first computing $V_t := H(t)^{s_0} \prod_{i=1}^{n} c_{i,t} = \prod_{i=1}^{n} \prod_{j=1}^{r} g_j^{x_{i,t,j}}$, and then $\overrightarrow{X_t} = (X_{t,1}, \dots, X_{t,r})$, with $X_{t,j} = \sum_{i=1}^{n} x_{i,t,j}$ for each $j \in \{1, \dots, r\}$, as the unique representation of $V_t \in G_2$ with regard to basis $\langle g_1, \cdots, g_r \rangle$.

Printed by Jouve, 75001 PARIS (FR)

**(Cont. next page)**

Figure 1

**Description**

TECHNICAL FIELD

The present invention relates generally to public-key cryptography, and in particular to privacy-preserving aggregation of encrypted data.

BACKGROUND

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

Computing the sum of data input by various users is, in itself, a trivial problem. However, the problem becomes much more complicated if the data is sensitive (e.g. private) and the sum is to be calculated by an untrusted party, hereinafter called aggregator. In this case, there is a need for a so-called aggregator-oblivious (AO) encryption scheme that allows the users to encrypt their data and the aggregator to calculate the sum without being able to obtain knowledge about the individual data from a user.

Such privacy-preserving aggregation has many potential applications: electronic voting, electronic auctions, recommendation systems allowing users to privately disclose their preferences and so forth. As the number of users may be great, it is a distinct advantage if the aggregation remains practical computation-wise.

Further introductory information may be found in Elaine Shi, T.-H. Hubert Chan, Eleanor G. Rieffel, Richard Chow, and Dawn Song. Privacy-preserving aggregation of time-series data. In Proceedings of the Network and Distributed System Security Symposium (NDSS 2011). The Internet Society, 2011. Available at URL http://www.isoc.org/isoc/conferences/ndss/11/pdf/9_3.pdf.

**Definition** An aggregator-oblivious encryption scheme is a tuple of algorithms, (Setup, Enc, AggrDec), defined as:

- Setup($1^\kappa$) - On input security parameter $\kappa$, a trusted dealer generates system parameters param, the aggregator's private key $sk_0$, and a private encryption key $sk_i$ for each user ($1 \leq i \leq n$);
- Enc(param, $sk_i$, $x_{i,t}$) - During time $t$, user $i$ encrypts a value $x_{i,t}$ using its private encryption key $sk_i$ to obtain an encrypted value $c_{i,t}$ = Enc(param, $sk_i$, $x_{i,t}$).

- AggrDec(param, $sk_0$; $c_{1,t}$,..., $c_{n,t}$) - During time period $t$, the aggregator using $sk_0$ obtains $X_t = \sum_{i=1}^{n} x_{i,t}$ as $X_t$ = AggrDec(param, $sk_0$; $c_{1,t}$,..., $c_{n,t}$).

**Security** The security notion of aggregator-oblivious (AO) requires that the aggregator cannot learn, for each time period, anything more than the aggregated value $X_t$ from the encrypted values of $n$ (honest) users. If there are corrupted users (i.e., users sharing their private information), the notion only requires that the aggregator gets no extra information about the values of the honest users beyond their aggregated value. Furthermore, it is assumed that each user encrypts only one value per time period.

More formally, AO is defined by the following game between a challenger and an attacker. The challenger runs the Setup algorithm and gives param to the attacker.

In a first phase, the attacker can submit queries that are answered by the challenger. The attacker can make two types of queries:

1. Encryption queries: The attacker submits ($i, t, x_{i,t}$) for a fresh pair ($i, t$) - i.e. queries like ($i, t, x_{i,t}$) and ($i, t, x'_{i,t}$) are not permitted unless $x_{i,t}$ is equivalent to $x'_{i,t}$ - and gets back the encryption of $x_{i,t}$ under key $sk_i$ for time period t; and
2. Compromise queries: The attacker submits $i$ and receives the private key $sk_i$ of user $i$; if $i$ = 0, the attacker receives the private key of the aggregator.

In a second phase, the attacker chooses a time period $t^*$. Let $U^* \subseteq \{1,..., n\}$ be the whole set of users for which, at the end of the game, no encryption queries have been made on time period $t^*$ and no compromised queries have been made. The attacker chooses a subset $S^* \subseteq U^*$ and two different series of triples $\langle (i, t^*, x^{(0)}_{i,t^*}) \rangle_{i \in S^*}$ and $\langle (i, t^*, x^{(1)}_{i,t^*}) \rangle_{i \in S^*}$ that are given to the challenger. Further, if the aggregator capability $sk_0$ is compromised at the end of the game and $S^* = U^*$, it is required that $\sum_{i \in U^*} x_{i,t*}^{(0)} = \sum_{i \in U^*} x_{i,t*}^{(1)}$. The challenger chooses at random a bit $b \in \{0, 1\}$ and returns the encryption of $\langle x^{(b)}_{i,t*} \rangle_{i \in S^*}$ to the attacker. At the end of the game, the attacker outputs a bit $b'$ and wins the game if and only if $b' = b$. An encryption scheme meets the AO security notion if no probabilistic polynomial-time attacker can guess correctly the bit $b$ with a probability non-negligibly better than 1/2.

In the paper already mentioned, Shi et al. also consider the following encryption scheme and show that the scheme meets the AO security notion under the Decisional Diffie-Hellman (DDH) assumption [see Dan Boneh. The decision Diffie-Hellman problem. In J. Buhler, editor, Algorithmic Number Theory (ANTSIII), volume 1423 of Lecture Notes in Computer Science, pages 48-63. Springer-Verlag, 1998.] in the random oracle model:

- Setup($1^\kappa$) - Let a group G of prime order $q$ for which the DDH assumption holds, and let a random generator $g \in$ G. Let also a hash function $H : Z \to$ G viewed as a random oracle. Finally, let n random elements in $Z / qZ$, $s_1,...,$ $s_n$, and define $s_0 = -\sum_{i=1}^{n} s_i \bmod q$. $s_i \bmod q$. param = {G, $g$, $H$}; $sk_i = s_i$ (for $0 \le i \le n$).
- Enc(param, $sk_i$, $x_{i,t}$) - At time period $t$, for a private input $x_{i,t} \in Z / qZ$, user $i$ produces $c_{i,t} = g^{x_i,t} H(t)^{s_i}$.
- AggrDec(param, $sk_0$, $c_{1,t},..., c_{n,t}$) - The aggregator obtains the sum $X_t$ for time period $t$ by first computing $V_t = H(t)^{s_0}$ $\prod_{i:}^{n} c_{i,t}$ = $g^{X_t}$ and next the discrete logarithm of $V_t$ w.r.t. basis $g$.

It will be appreciated that since $g$ has order $q$, the so-obtained value for $X_t$ is defined modulo $q$.

Shi et al.'s scheme involves the computation of a discrete logarithm in a prime-order group for which the DDH assumption holds. Namely, using the previous notation, the aggregator has to compute the value of $X_t$ from $V_t = g^{X_t}$ in G. For known groups satisfying Shi et al.'s setting, only generic methods are available. There is therefore a need to have settings where the computation of discrete logarithms can be done efficiently while, at the same time, the AO security notion is met.

In addition, in Shi et al.'s scheme there is a restriction on the message space or on the number of users. It will be appreciated that this can be a disadvantage.

The present invention provides a solution that improves upon the prior art in that it overcomes at least some of its disadvantages.

SUMMARY OF INVENTION

In a first aspect, the invention is directed to a method of encrypting a value $\overrightarrow{x_{i,t}} = \left(x_{i,t,1}, ..., x_{i,t,r}\right)$ for a user $i$ in an aggregator-oblivious encryption system with $n$ users, wherein $t$ denotes a time period. A processor of a device generates an encrypted value $c_{i,t}$ for the time period $t$, by using the value $\overrightarrow{x_{i,t}}$ as an exponent to a base of a second group $G_2 = \langle g_1, \cdots, g_r \rangle$ with order $q_2$ in which discrete logarithms are calculable in polynomial time and using a key $s_i$ for user $i$ as an exponent to a base in a first group $G_1$ with order $q_1$ in which discrete logarithms are calculable only in non-polynomial time for a security parameter $\kappa$, the first group $G_1$ and the second group $G_2$ both being different subgroups of a third group G, and wherein the key $s_i$ is provided by a dealer and has been generated so that an aggregator key $s_0 = -\sum_{i=1}^{n} s_i$; and outputs the encrypted value $c_{i,t}$.

In a first preferred embodiment, the encrypted value $c_{i,t}$ for the time period $t$ is generated by calculating $c_{i,t} = g_1^{x_i,t,1} \cdots g_r^{x_i,t,r} \cdot H(t)^{s_i}$, wherein $H(t)$ is a hash function that hashes the time $t$ on to an element of the first group $G_1$.

In a second preferred embodiment, the encrypted value $c_{i,t}$ is output to an aggregator.

In a third preferred embodiment, the key $s_i \in [-L^2, ..., L^2]$ with # $G_1 < L$.

In a fourth preferred embodiment, the first group $G_1$ is equal to the third group G.

In a second aspect, the invention is directed to a device for encrypting a value $x_{i,t} = (x_{i,t,1},...,x_{i,t,r})$ for a user $i$ in an aggregator-oblivious encryption system with $n$ users, wherein $t$ denotes a time period. The device comprises memory configured to store a key $s_i$ for user $i$ provided by a dealer and generated so that an aggregator key $s_0 = -\sum_{i=1}^{n} s_i$; a processor configured to generate an encrypted value $c_{i,t}$ for the time period $t$, by using the value $\overrightarrow{x_{i,t}}$ as an exponent to a base of a second group $\mathbb{G}_2 = \langle g_1, \cdots, g_r \rangle$ with order $q_2$ in which discrete logarithms are calculable in polynomial time and using the key $s_i$ as an exponent to a base in a first group $G_1$ with order $q_1$ in which discrete logarithms are calculable only in non-polynomial time for a security parameter $\kappa$, the first group $G_1$ and the second group $G_2$ both being different subgroups of a third group G; and an interface configured to output the encrypted value $c_{i,t}$.

In a first preferred embodiment, the processor is configured to generate the encrypted value $c_{i,t}$ for the time period $t$ by calculating $c_{i,t} = g_1{}^{xi,t,1} \cdots g_r{}^{xi,t,r} \cdot H(t)^{si}$, wherein $H(t)$ is a hash function that hashes the time $t$ on to an element of the first group $G_1$.

In a second preferred embodiment, the interface is configured to output the encrypted value $c_{i,t}$ to an aggregator.

In a third preferred embodiment, the key $s_i \in [-L^2, ..., L^2]$ with $\# G_1 < L$.

In a fourth preferred embodiment, the first group $G_1$ is equal to the third group G.

In a third aspect, the invention is directed to a non-transitory computer program product having stored thereon instructions that, when executed by a processor, perform the method of any embodiment of the first aspect.

BRIEF DESCRIPTION OF DRAWINGS

Preferred features of the present invention will now be described, by way of non-limiting example, with reference to the accompanying drawings, in which:

Figure 1 illustrates an aggregator-oblivious encryption system according to a preferred embodiment of the invention; and
Figure 2 illustrates a method for aggregator-oblivious aggregation of user data according to a preferred embodiment of the invention.

DESCRIPTION OF EMBODIMENTS

The present invention is directed to an aggregator-oblivious encryption scheme. A main inventive idea is to consider groups of unknown [composite] order for which there is a subgroup wherein some complexity hardness assumption (e.g., the DDH assumption) holds and another subgroup wherein discrete logarithms are easily computable. The order of the underlying group is only known to a trusted dealer. As the aggregator does not know the group order it cannot recover the user's private key.

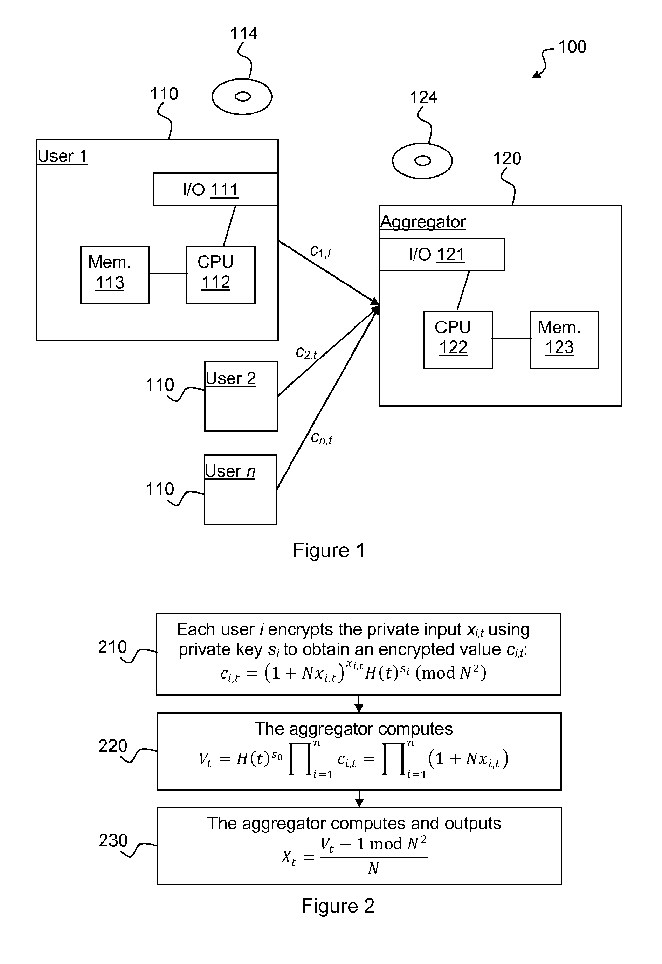

Figure 1 illustrates an aggregator-oblivious encryption system 100 according to a preferred embodiment of the invention. For ease of illustration and comprehension, the connections between the devices in the system have been omitted.

The system 100 comprises a plurality of users 110 - User 1,..., User $n$ - and an aggregator 120, each comprising at least one interface unit 111, 121 configured for communication, at least one processor ("processor") 112, 122 and at least one memory 113, 123 configured for storing data, such as accumulators and intermediary calculation results.

As will be further described hereinafter, the processor 112 of a user 110 is configured to encrypt a user input to obtain an encrypted value $c_{i,t}$ that is sent, via the interface unit 111 to the aggregator 120, and the interface unit 121 of the aggregator 120 is configured to receive the encrypted values and aggregate them. A first computer program product (non-transitory storage medium) 114 such as a CD-ROM or a DVD comprises stored instructions that, when executed by the processor 112 of a user 110, encrypts a user input according to the invention. A second computer program product (non-transitory storage medium) 124 comprises stored instructions that, when executed by the processor 122 of the aggregator 120, aggregates the received encrypted values according to the invention.

General form

In its most general form, the invention may be described as follows. Let G be a group of composite order for which there is a first subgroup $G_1 \subseteq G$ of unknown (except to a trusted dealer) order $q_1$ in which some complexity hardness assumption (e.g., the DDH assumption) holds for some security parameter $\kappa$ and a second, different subgroup $G_2 \subseteq G$ of order $q_2$ wherein discrete logarithms are "easy" to compute. Put another way, in $G_1$ discrete logarithms are computable (i.e. calculable) in non-polynomial time (only), whereas they are computable in polynomial time in $G_2$; as is well known, Cobham's thesis states that polynomial time is a synonym for "easy", "efficient" and "fast".

If $r$ denotes the rank of group $G_2$, which can thus be written as a product $\langle g_1 \rangle \times ... \times \langle g_r \rangle$, it is further assumed that it must be "easy" to compute the representation of arbitrary $G_2$ elements with respect to the base $\langle g_1, ..., g_r \rangle$.

As previously mentioned, the order of $G_1$, $q_1$, is known only to a trusted dealer, while it is unknown to any other party, including the aggregator. These parties are only able to derive an upper bound on $q_1$.

The message space is denoted by $M \subseteq (Z/q_{2,1}Z) \times \cdots \times (Z/q_{2,r}Z)$, where $r$ is the rank of $G_2$ and, for each $j \in \{1, ..., r\}$, $q_{2,j}$ denotes the order of the subgroup $\langle g_j \rangle$ in $G_2$.

- Setup($1^\kappa$) - On input security parameter $\kappa$, the trusted dealer defines two subgroups $G_1$ and $G_2 = \langle g_1, \cdots, g_r \rangle$ as described. The trusted dealer also defines a hash function $H : Z \to G_1$ viewed as a random oracle. Let $L$ be such that $\# G_1 < L$ (where $\# G_1$ denotes the cardinality of $G_1$; in case $G_1$ is a group, it is also called the order of the group). The trusted dealer chooses uniformly, i.e. statistically indisguinshable from the uniform distribution, at random $n$ integers $s_1, ..., s_n \in [-L^2, ..., L^2]$ and sets $S_0 = -\sum_{i=1}^{n} S_i$ . param $= \{G_1, G_2, \langle g_1, \cdots, g_r \rangle, H\}$; $sk_i = s_i$ (for $0 \le i \le n$).

- Enc(param, $sk_i$, $x_{i,t}$) - During time period $t$, for a private input $\overrightarrow{x_{i,t}} = (x_{i,t,1}, ..., x_{i,t,r}) \in \mathcal{M}$, user $i$ produces encrypted value $c_{i,t} = g_1^{x_{i,t,1}} \cdots g_r^{x_{i,t,r}} \cdot H(t)^{s_i}$.

- AggrDec(param, $sk_0$, $c_{1,t}, ..., c_{n,t}$) - The aggregator obtains the sum $X_t$ for time period $t$ by first computing

$$V_t := H(t)^{s_0} \prod_{i=1}^{n} c_{i,t} = \prod_{i=1}^{n} \prod_{j=1}^{r} g_j^{x_{i,t,j}}, \qquad \text{and} \qquad \text{then} \qquad \overrightarrow{X_t} = (X_{t,1}, ..., X_{t,r}), \qquad \text{with}$$

$$X_{t,j} = \sum_{i=1}^{n} x_{i,t,j} \text{ for each } j \in (1,...,r), \text{ as the unique representation of } V_t \in G_2 \text{ with regard to basis } \langle g_1, \cdots, g_r \rangle.$$

Preferred embodiment

If $p$ is a prime, then the Legendre symbol of an integer $\alpha$ co-prime to $p$, written $\left(\frac{a}{p}\right)$, is defined as $\left(\frac{a}{p}\right) = +1$ if $\alpha$ is a square modulo $p$ and as $\left(\frac{a}{p}\right) = -1$ otherwise. The Jacobi symbol is a generalization of the Legendre symbol.

Let $N = \prod_{j=1}^{k} p_j^{\alpha_j}$ denote the prime factorization of an integer $N$. If $\alpha$ is an integer co-prime to $N$ then the Jacobi symbol of $\alpha$ is defined as $\left(\frac{a}{N}\right) = \prod_{j=1}^{k} \left(\frac{a}{p_j}\right)^{\alpha_j}$. The set of elements modulus $N$ whose Jacobi symbol is +1 forms a multiplicative group which is denoted $J_N$. In this instantiation, $G_2$ is cyclic, i.e. $r = 1$. It will be appreciated that the factorization of $N$ is not required to compute the Jacobi symbol.

- Setup($1^\kappa$) - On input security parameter $\kappa$, the trusted dealer randomly generates two safe, balanced primes $p$ and $q$, where $p = 2p' + 1$ and $q = 2q' + 1$ with both $p'$ and $q'$ prime. Let $N = pq$ and $= (Z/N^2Z)^\times$. Let also $G_1$ be the subgroup of order $2p'q'N$ in $(Z/N^2Z)^\times$ with Jacobi symbol +1 modulo $N$,

$$\mathbb{G}_1 = \left\{ a \in (\mathbb{Z}/N^2\mathbb{Z})^\times \middle| \left(\frac{a}{N}\right) = +1 \right\},$$

and $G_2$ be the subgroup of order $N$ in $(Z/N^2Z)^\times$. It will be appreciated that any element $\alpha \in G_1$ can be uniquely written as $\alpha = \alpha_1 + N\alpha_2$ with $\alpha_1 \in J_N$ and $\alpha_2 \in Z/NZ$. Group $G_2$ is cyclic and is generated by $(1 + N)$.
It also defines a hash function $H : Z \to G_1 : t \mapsto H(t) = f_1(t) + N \cdot f_2(t)$, where $f_1 : Z \to J_N$ and $f_2 : Z \to Z/NZ$ are both hash functions viewed as random oracles. Letting $\ell$ the bit-length of $p'q'$, from $n$ randomly chosen elements in $\pm\{0,1\}^{2\ell}$, $s_1,..., s_n$, it finally sets $S_0 = -\sum_{i=1}^{n} S_i$ . (Here $L = 2^\ell$.) param $= \{N, f_1, f_2\}$; $sk_i = s_i$ (for $0 \le i \le n$).

- Enc(param, $sk_i$, $x_{i,t}$) - During time period $t$, for a private input $x_{i,t} \in Z/NZ$, user $i$ produces encrypted value $c_{i,t} = (1 + N)^{x_{i,t}} H(t)^{s_i} \pmod{N^2}$, step 210.

- AggrDec(param, $sk_0$, $c_{1,t}, ..., c_{n,t}$) - The aggregator obtains the sum $X_t$ for time period $t$ by first computing

$$V_t := H(t)^{s_0} \prod_{i=1}^{n} c_{i,t} = \prod_{i=1}^{n}\left(1 + Nx_{i,t}\right),$$ step 220, and then, step 230, $X_t$ (that is then preferably output) as

$$X_t = \frac{V_t - 1 \bmod N^2}{N}$$

The correctness follows by observing that $H(t)^{s_0} \prod_{i=1}^{n} c_{i,t} \equiv$

$\prod_{i=1}^{n}(1+N)^{x_{i,t}} H(t)^{s_i} \equiv \prod_{i=1}^{n}\left(1 + Nx_{i,t}\right) \equiv 1 + N\left(\sum_{i=1}^{n} x_{i,t} \bmod N\right) \pmod{N^2}$. Observe that the value

of $X_t$ is defined modulo $N$. Hence, if $\sum_{i=1}^{n} x_{i,t}$ we have $X_t = \frac{V_t - 1 \bmod N^2}{N} = \sum_{i=1}^{n} x_{i,t}$ over the integers.

A main difference when compared to the scheme of Shi et al. is that in the present scheme there is no discrete logarithm to compute in a group in which a complexity hardness assumption holds. On the contrary, the recovery of $X_t$ from the accumulated product $V_t$ is now easy. As a result, there is no longer any practical restriction on the size of $x_{i,t}$

or on the total number $n$ of users, as long as $\sum_{i=1}^{n} x_{i,t} < N$.

It will be appreciated that, given a hash function $f_0 : Z \rightarrow (Z/NZ)^{\times}$, it is easy to construct a hash function $f_1 : Z \rightarrow J_N$ by iterating $f_0$ until a value with Jacobi symbol +1 is obtained.

It will thus be appreciated that the present invention provides a aggregator-oblivious encryption scheme that overcomes at least some of the disadvantages of the scheme provided by Shi et al..

Each feature disclosed in the description and (where appropriate) the claims and drawings may be provided independently or in any appropriate combination. Features described as being implemented in hardware may also be implemented in software, and vice versa. Reference numerals appearing in the claims are by way of illustration only and shall have no limiting effect on the scope of the claims.

## Claims

1. A method of encrypting a value $\overrightarrow{x_{i,t}} = \left(x_{i,t,1}, \ldots, x_{i,t,r}\right)$ for a user $i$ in an aggregator-oblivious encryption system with $n$ users, wherein $t$ denotes a time period, the method comprising the steps in a processor (112) of a device (110), of:

   - generating an encrypted value $c_{i,t}$ for the time period $t$, by using the value $\overrightarrow{x_{i,t}}$ as an exponent to a base of a second group $G_2 = \langle g_1, \cdots, g_r \rangle$ with order $q_2$ in which discrete logarithms are calculable in polynomial time and using a key $s_i$ for user $i$ as an exponent to a base in a first group $G_1$ with order $q_1$ in which discrete logarithms are calculable only in non-polynomial time for a security parameter $\kappa$, and wherein the key $s_i$ is provided by a dealer and has been generated so that an aggregator key $s_0 = -\sum_{i=1}^{n} s_i$ ; and
   - outputting the encrypted value $c_{i,t}$;
   **characterised in that** the first group $G_1$ and the second group $G_2$ both are different subgroups of a third group G.

2. The method of claim 1, wherein the encrypted value $c_{i,t}$ for the time period $t$ is generated by calculating $c_{i,t} = g_1{}^{x_{i,t,1}} \cdots g_r{}^{x_{i,t,r}} \cdot H(t)^{s_i}$, wherein $H(t)$ is a hash function that hashes the time $t$ on to an element of the first group $G_1$.

3. The method of claim 1 or 2, wherein the encrypted value $c_{i,t}$ is output to an aggregator (120).

4. The method of claim 1, wherein the key $s_i \in [-L^2, \ldots, L^2]$ with $\# G_1 < L$.

**5.** The method of claim 1, wherein the first group $G_1$ is equal to the third group G.

**6.** A device (110) for encrypting a value $\overrightarrow{x_{i,t}} = \left( x_{i,t,1}, \dots, x_{i,t,r} \right)$ for a user $i$ in an aggregator-oblivious encryption system with $n$ users, wherein $t$ denotes a time period, the device (110) comprising:

memory (113) configured to store a key $s_i$ for user $i$ provided by a dealer and generated so that an aggregator key $s_0 = -\sum_{i=1}^{n} s_i$ ;

a processor (112) configured to generate an encrypted value $c_{i,t}$ for the time period $t$, by using the value $\overrightarrow{x_{i,t}}$ as an exponent to a base of a second group $G_2 = \langle g_1, \cdots, g_r \rangle$ with order $q_2$ in which discrete logarithms are calculable in polynomial time and using the key $s_i$ as an exponent to a base in a first group $G_1$ with order $q_1$ in which discrete logarithms are calculable only in non-polynomial time for a security parameter $\kappa$, **characterised in that** the first group $G_1$ and the second group $G_2$ both are different subgroups of a third group G; and
an interface (111) configured to output the encrypted value $c_{i,t}$.

**7.** The method of claim 6, wherein the processor (112) is configured to generate the encrypted value $c_{i,t}$ for the time period $t$ by calculating $c_{i,t} = g_1^{x_{i,t,1}} \cdots g_r^{x_{i,t,r}} \cdot H(t)^{s_i}$, wherein $H(t)$ is a hash function that hashes the time $t$ on to an element of the first group $G_1$.

**8.** The method of claim 6 or 7, wherein the interface (111) is configured to output the encrypted value $c_{i,t}$ to an aggregator (120).

**9.** The method of claim 6, wherein the key $s_i \in [-L^2, ..., L^2]$ with $\# G_1 < L$.

**10.** The method of claim 6, wherein the first group $G_1$ is equal to the third group G.

**11.** A non-transitory computer program product (114) having stored thereon instructions that, when executed by a processor, perform the method of any one of claims 1 to 5.

114

110

100

124

120

User 1

I/O 111

Mem.
113

CPU
112

$c_{1,t}$

Aggregator

I/O 121

CPU
122

Mem.
123

$c_{2,t}$

110 — User 2

$c_{n,t}$

110 — User $n$

Figure 1

210 — Each user $i$ encrypts the private input $x_{i,t}$ using private key $s_i$ to obtain an encrypted value $c_{i,t}$:

$$c_{i,t} = \left(1 + Nx_{i,t}\right)^{x_{i,t}} H(t)^{s_i} \pmod{N^2}$$

220 — The aggregator computes

$$V_t = H(t)^{s_0} \prod_{i=1}^{n} c_{i,t} = \prod_{i=1}^{n} \left(1 + Nx_{i,t}\right)$$

230 — The aggregator computes and outputs

$$X_t = \frac{V_t - 1 \bmod N^2}{N}$$

Figure 2

**Europäisches Patentamt**
**European Patent Office**
**Office européen des brevets**

# EUROPEAN SEARCH REPORT

**Application Number**

EP 12 30 6250

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y,D | Elaine Shi ET AL: "Privacy-Preserving Aggregation of Time-Series Data", Proceedings of the Network and Distributed System Security Symposium (NDSS 2011), 9 May 2011 (2011-05-09), XP055058556, Retrieved from the Internet: URL:http://www.isoc.org/isoc/conferences/ndss/11/pdf/9_3.pdf [retrieved on 2013-04-04] * page 8, right-hand column * | 1-11 | INV. H04L9/00 H04L9/30 |
| Y | "Chapter 12: Key Establishment Protocols ED - Menezes A J; Van Oorschot P C; Vanstone S A", HANDBOOK OF APPLIED CRYPTOGRAPHY; [CRC PRESS SERIES ON DISCRETE MATHEMATICES AND ITS APPLICATIONS], CRC PRESS, BOCA RATON, FL, US, PAGE(S) 489 - 541 , 1 October 1996 (1996-10-01), XP001525012, ISBN: 978-0-8493-8523-0 Retrieved from the Internet: URL:http://www.cacr.math.uwaterloo.ca/hac/ * note 12.50; pages 516-517 * | 1-11 | |
| A | CASTELLUCCIA C ET AL: "E.cient Aggregation of encrypted data in Wireless Sensor Networks", MOBILE AND UBIQUITOUS SYSTEMS: NETWORKING AND SERVICES, 2005. MOBIQUIT OUS 2005. THE SECOND ANNUAL INTERNATIONAL CONFERENCE ON SAN DIEGO, CA, USA 17-21 JULY 2005, PISCATAWAY, NJ, USA,IEEE, LOS ALAMITOS, CA, USA, 17 July 2005 (2005-07-17), pages 109-117, XP010853989, ISBN: 978-0-7695-2375-0 * pages 4-6 * | 1-11 | TECHNICAL FIELDS SEARCHED (IPC) H04L |

The present search report has been drawn up for all claims

| Place of search | Date of completion of the search | Examiner |
|---|---|---|
| Munich | 8 April 2013 | Horbach, Christian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ELAINE SHI ; T.-H. HUBERT CHAN ; ELEANOR G. RIEFFEL ; RICHARD CHOW ; DAWN SONG.** Privacy-preserving aggregation of time-series data. *Proceedings of the Network and Distributed System Security Symposium,* 2011

- *The Internet Society,* 2011, http://www.isoc.org/isoc/conferences/ndss/11/pdf/9_3.pdf
- The decision Diffie-Hellman problem. **DAN BONEH.** Algorithmic Number Theory (ANTSIII), volume 1423 of Lecture Notes in Computer Science. Springer-Verlag, 1998, vol. 1423, 48-63